# EUROPEAN PATENT SPECIFICATION

(11) **EP 1 855 834 B1**
(45) Date of publication and mention of the grant of the patent: **19.04.2017**
(21) Application number: 05749308.2
(22) Date of filing: 17.05.2005
(51) Int. Cl.: B23K 9/09

(54) **Method of welding austenitic steel pipes**
Verfahren zum Schweissen von aus austenitischem Stahl hergestellten Rohren
Procédé de soudage de tubes d'acier austénitiques

(30) Priority: 21.01.2005 US 646037 P
(43) Date of publication of application: 21.11.2007
(73) Proprietor: Fluor Technologies Corporation, Aliso Viejo CA 92698 (US)
(72) Inventor: MESSER, Barry, Calgary, Alberta T2W 5Z9 (CA); SEITZ, Shawn, Calgary, Alberta T3H 3J2 (CA); ARMSTRONG, Kenneth E., Edmonton, Alberta T5P 2N2 (CA); PATRICK, Charles, Katy, TX 77450 (US)
(74) Representative: Dr. Graf & Partner AG
(86) International application number: PCT/US2005/017334
(87) International publication number: WO 2005/118198

(56) References cited:
- WO-A1-97/22432
- JP-A- 10 193 106
- US-A- 6 160 241

## Description

The field of the invention is welding, especially as it relates to welding of stainless steel. The present invention relates to a method of welding austenitic steel pipes.

### Background of the Invention

Skilled labor shortage, new metal compositions, and increasing demands on structure and stability in welding joints led to various attempts to reduce cost-ineffectiveness and/or speed up the welding process to reproducibly create code acceptable welds for heavy wall stainless steel.

Most commonly, heavy wall stainless steel is welded with an open root using a gas tungsten arc welding (GTAW) process with an argon backing gas purge to prevent sugaring oxidation (e.g., on the inside of a pipe). GTAW is typically a manual process and therefore substantially slower than other, semi-automated processes. Moreover, GTAW generally necessitates frequent stops and starts due to the limited filler metal rod length. Still further, GTAW requires dexterity and coordination with both hands as the direction of the arc energy must be focused onto the parent metal and the filler metal must be independently deposited in the arc/puddle envelope. Where needed, the remainder of a weld joint of heavy wall stainless steel is then completed using a Shielded Metal Arc Welding (SMAW) process, which is also commonly a manual process that demands significant welder proficiency.

While the GTAW/SMAW process generally provides acceptable welds to at least some degree, cost-ineffectiveness and relatively high failure rate are a significant drawback. Typically, GTAW/SMAW yields a repair rate that exceeds 5% thereby decreasing overall productivity. Thus, processes that lend themselves to automation and higher deposition rates have recently been favored. Among other advantages, semi-automatic welding processes allow for a significant decrease in welder dexterity and coordination, and further often yield lower repair rates.

For example, continual feeding of the wire in a semi-automated process negates the need to adjust for the burn-off rate of the electrode and further allows the welder to direct the gun with one hand and steady with the other. One such semi-automatic process is the first generation short circuit Gas Metal Arc Welding (GMAW-S), using transformer-rectifier machines. However, the arc produced by the GMAW-S transformer-rectifier machine is often violent and unstable, which tends to lead towards incomplete fusion (lack of fusion). Furthermore, fit-ups (position welds) are often still required to ascertain an exacting placement of the weld. Unfortunately, the need for fit-ups typically prohibits the use of the GMAW-S process on materials that exhibited even the smallest degree of weld joint mismatch (high-low) or that are out of roundness.

To overcome at least some of the problems associated with GMAW-S, an inverter may be employed to improve arc optimization and control of GMAW-S when compared to those using only a transformer-rectifier. With the so added control, a reduction in operating expenditures can often be achieved due to increased efficiency and reduced energy losses in power conversion. However, inverters often fail to compensate for weld joint mismatch or out of round pipe, thus necessitating a skilled welder.

Software-driven power sources may be used to control the waveform, which in turn allows for optimization of arc characteristics. Among other advantages, modifications of the short-circuiting transfer mode (e.g., by remotely monitoring and controlling the electrode current output via computers through all phases of welding) facilitates the development of the short-circuiting (modified) transfer mode. The GMAW-Sm process typically overcomes many limitations of conventional GMAW-S while maintaining comparable weld metal deposition rates and consistently achieving radiographic quality welds (Sm refers to computer controlled waveform with and without feedback loop). In addition, GMAW-Sm has an increased tolerance of less experienced and less skilled welders, thus overcoming problems associated with misalignment and/or out of round pipes. Still further, the GMAW-Sm process is tolerant of gaps and capable of automatically maintaining the optimum wire feed speed. Thus, the GMAW-Sm process automatically maintains the contact tip to work distance, thereby increasing production rates and reducing welder fatigue.

Therefore, while numerous welding processes are well known in the art, all or almost all of them suffer from one or more disadvantages. Most significantly, while welding can be done with relatively low cost, most welding processes nevertheless have a high demand on time and speed. Still further, using heretofore known welding methods on stainless steel, the repair rates are often still too high for economic operation. Consequently, there is still a need to provide improved welding methods, particularly for stainless; steel. WO 97/22432 A1 discloses a method of welding workpieces in which one piece is made of austenitic steel, in which method there is provided a welding a root step using GMAW-Sm to thereby deposit a root, and welding at least one of a fill pass and a cap pass using GMAW.

### Summary of the Invention

According to claim 1, the present invention is directed to a method of welding austenitic steel pipes. The contemplated method also avoids the use of backing gas, which further facilitates the processes presented herein and advantageously reduces associated costs.

The method of welding austenitic steel pipes includes a step in which a root pass is welded using GMAW-Sm to thereby deposit a root, and at least one hot pass is welded using GMAW-P to thereby deposit additional weld metal onto the root, and in yet another step, at least one fill pass and/or cap pass are welded using at least one of GMAW-P and FCAW.

The backing gas is omitted in the step of welding the root pass and the root pass is welded in 5G position downhill, while the hot pass is welded in 5G position downhill at a heat input of less than 0.85 kJ/mm. Moreover, it is typically preferred that the root pass material is selected to provide a chemically stabilized weld, and that the hot pass material and/or the fill pass material is formulated for stainless steel welding (and has a molybdenum content of between 1.0% to 1.3%, and a ferrite number of between 1 and 6). In still further preferred methods, the additional weld metal is formulated for welding stainless steel components for high pressure and/or high temperature service.

In another aspect of the inventive subject matter, a method of welding stainless steel includes a step in which a root is deposited without backing gas to provide a chemically stabilized weld using a high-frequency current-controlled power supply in short circuiting welding mode. In another step, a filler metal is deposited onto the root using a heat input of less than 0.85 kJ/mm, and in yet another step, additional metal is deposited onto the filler metal using at least one of GMAW-P and FCAW. stainless steel, 316 stainless steel, 317 stainless steel, 321 stainless steel, and/or 347 stainless steel, which may have a thickness of between 0.1 mm and 60 mm, more typically between 10 mm and 50 mm, and most typically between 20 mm and 40 mm.

Various objects, features, aspects and advantages of the present invention will become more apparent from the following detailed description of preferred embodiments of the invention.

### Brief Description of the Drawing

Figure 1 is a photograph of an exemplary root bead weld (outside surface) prepared according to the inventive subject matter.
Figure 2 is a photograph of an exemplary root bead weld (inside surface) prepared according to the inventive subject matter.

### Detailed Description

The inventors discovered that the GMAW-Sm process can be substantially improved, and even be performed without backing gas when welding a wide range of thicknesses of 304 and 316 stainless steels. Using contemplated processes, it should be noted that the welding efficiency can be substantially improved while maintaining the quality of the so fabricated welds. Most notably, contemplated processes for welding stainless steel pipes eliminated root bead oxidation, even in the absence of backing gas. While numerous stainless steel materials are contemplated suitable for use in conjunction with the processes contemplated herein, especially, preferred stainless steel materials include 304 stainless steel, 316 stainless steel, 317 stainless steel, 321 stainless steel, and 347 stainless steel.

Among other improvements, and especially when GMAW-Sm is combined with other semiautomatic welding processes (e.g., Pulsed Gas Metal Arc Welding (GMAW-P), Flux Cored Arc Welding (FCAW)), superior results were obtained for various stainless steel welds (exemplary results are given below with chemically stabilized heavy wall 321 stainless steel). Many of contemplated processes were combined with the "No-Backing Gas" (NBG) root technique to provide code acceptable welds with excellent corrosion and crack resistance for type 321 Stainless Steel. Remarkably, using such welding processes, welds were deposited in approximately one third the time commonly demanded by conventional welding.

In one preferred aspect of the inventive subject matter, the welding power source was a semi-automatic software-driven system that was utilized with GMAW-Sm, GMAW-P, and FCAW processes. Such power source advantageously provided a high quality weld at high deposition rates and increased gap bridging. Furthermore, it should be especially appreciated that the maneuverability and portability of the welding equipment together with elimination of required backing gas (purge) with a properly developed GMAW-Sm root pass procedure substantially boosted production output. For example, one exemplary power source was a three phase DC inverter with controlled waveform technology for the root pass with a rated output of 450 amps at 44 volts and 100% duty cycle that was combined with a suitcase wire feeder with voltage sensing, maximum throughput of 500 amps at 100 volts, and 100% duty cycle. With respect to the arc transfer mode, it should be noted that the selection of process and transfer modes for the root, second pass layers (hot pass), and fill/cap applications was predominantly determined by the necessity of expedient and reproducible code acceptable welds by moderately skilled craftsmen.

With respect to the root pass, it is generally preferred that the root pass is performed as a downhand GMAW-Sm, and that backing gas is omitted to achieve substantial cost savings and a smoother, less convex top surface of the pass. It should be recognized that surfaces achieved with such methods typically require less superficial cleanup prior to depositing subsequent weld layers. However, other less preferred welding positions and progressions are also contemplated herein. For example, suitable positions include 1G, 2G, 3G, or 6G, each of which may have uphill or downhill progression. In further less preferred aspects, backing gas may be employed, and especially where sugaring is observed, or where a welder is more experienced.

Higher heat transfer modes also contemplated herein include GMAW-Sm uphand (uphill), GMAW-P uphand and downhand (downhill), and FCAW. However, in most circumstances, these alternative modes have a higher degree of difficulty. It should further be recognized that the GMAW-Sm process is significantly more advanced than the existing definition of arc transfer mode definitions in ASME Section IX. Since a code case and a new transfer mode definition could take years to implement, GMAW-Sm was treated as a standard short-circuiting mode transfer and appropriately distinguished as "modified short circuit".

With respect to the hot pass, it is generally preferred that one or more hot passes are carried out using GMAW-P with a downhill progression as appropriate to form the second layer of deposited weld metal (which in many cases requires two passes). In production, this second layer was subsequently covered with two or more additional passes of GMAW-P, thereby completing the 3rd layer. It should be recognized that such process advantageously provides a relatively high deposition rate while achieving a more manageable weld puddle than traditional spray transfer. In a less preferred aspect, FCAW with uphill progression can be employed to deposit the hot pass. However, FCAW frequently results in heat damage at the fusion line region in the area of the root as excessive heat may be present with such welding process. Most typically, the hot pass is welded in 5G position with downhill progression. However, similar to the root pass, other less preferred welding positions and progressions are also contemplated herein. For example, alternative positions include 1G, 2G, 3G, or 6G, each of which may have uphill or downhill progression.

It should be particularly recognized that the relatively low heat input of less than 1.0 kJ/mm, more typically less than 0.85 kJ/mm, and most typically less than 0.75 kJ/mm (in many cases approximately 0.7 kJ/mm) for the "hot pass" is attributed to the intense arc combined with a relatively high travel speed. Even with the high travel speed employed, the downhill stringer beads typically maintained a controllable arc, thus ensuring good fusion at the toe of the weld puddle. Where desirable, additional heat input reductions can be realized by concentrating the arc energy at the toe of the previously deposited root, which enables easy deposition of multi-passes on the second and third layers. Consequently, the risk for melt-through and excessive heat damage on the process side of the non-purged root bead is substantially reduced by the considerations presented above. **Table 1** below lists exemplary welding parameters for joining 18 NPS, Schedule 140, A312 TP321/321H pipe, 75° compound bevel, 1.6 mm and, 3.2 mm gap.

With respect to the fill/cap passes, it is typically preferred to employ a combination of GMAW-P and FCAW based on the unique attributes afforded by each process. During production, the first "fill" layer (here: the fourth layer of deposited weld metal in the weld joint) was deposited on approximately 9.5 mm thick weld metal. Therefore, adequate backing thickness was provided for the absorption of the heat emitted by the FCAW pass without causing re-heat damage to the up-purged root. An additional benefit was the weld joint groove at this depth was sufficient to allow the fill passes to be deposited with minimal potential for slag entrapment. FCAW also provided higher deposition rates that attributed to larger weld beads and higher heat inputs. This, in turn, provided additional advantages since larger weld beads result in fewer passes, fewer stop/starts and subsequently less opportunity to produce weld defects. Of course, it should be recognized that all of the above welding steps (root pass, hot pass, fill/cap pass) can be manually performed. However, it is typically preferred that at least one of the welding steps in performed in a semi-automatic or fully automatic manner.

Numerous weld filler material are known in the art, and all of the known materials suitable for stainless steel welding are considered appropriate for use herein. For example, the root pass in the examples below was deposited using ER347Si filler metal, which is a high silicon niobium stabilized filler metal formulated to specifically weld stabilized 321 and 347 type stainless steels. It should be noted that the molybdenum content found in the ER347Si filler metal also provides an additional benefit regarding creep rupture ductility of CrNi austenitic steels, thus making its use possible in high temperature plants.

As ER347 filler metals have a tendency to experience hot cracking, low stress rupture ductility, and relaxation cracking at elevated service temperatures in heat affected zones, it is generally preferred to use a filler material that is suitable for high pressure/high temperature service. Among other appropriate fillers, 16.8.2-type filler metal is typically preferred for the balance of welding (such filler metal is formulated for welding 16Cr-8Ni-2Mo, 316 and 317 type stainless steels in high pressure/high temperature service and thus does not experience any hot cracking in typical commercial compositions). To further capitalize on the benefits from using the 16.8.2 filler metal, a "lean" version can be used which adds a minimum carbon content of 0.04%, a maximum molybdenum of 1.30%, and established a ferrite range of 1 to 6. A comparison of AWS allowed composition of 16.8.2 versus the "lean" composition is shown in **Table 2** below.

With respect to the shielding gas, it is typically preferred that all known shielding gases and mixtures may be used. However, due to the specific combination of materials and contemplated processes, selected shielding gases will produce a significantly more desirable or acceptable weld. Therefore, it is generally preferred that gases are selected on the basis of performance, availability, cost, separation, and various other variables. Most commonly, a shielding gas will affect weld parameters, including mode of metal transfer, penetration and weld bead profile, speed of welding, undercutting tendency, and cleaning action. Exemplary shielding gas mixtures are provided in **Table 3**. While each of the passes may be provided with a separate shielding gas or shielding gas mixture, it is generally preferred that all of the passes will be performed with the same shielding gas or shielding gas mixture. Based on the inventors experience (data see below), and among other suitable shielding gas or shielding gas mixtures, a single shielding gas for the hot and fill/cap passes was employed using a tri-gas mixture of SG-ACO-3/1 to provide a moderately hot gas for the balance of the weld. Alternatively, in less preferred aspects, a helium-containing shielding gas mixture (e.g., tri-gas mixture SG-HeAC-7.5/2.5) may be employed. However, helium typically does not lend itself to the pulse and pulse-spray modes of GMAW-P.

### Example

The following exemplary data were derived from welds using conditions as indicated below. However, it should be recognized that numerous modifications may be made without departing from the inventive concept presented herein.

### The Root

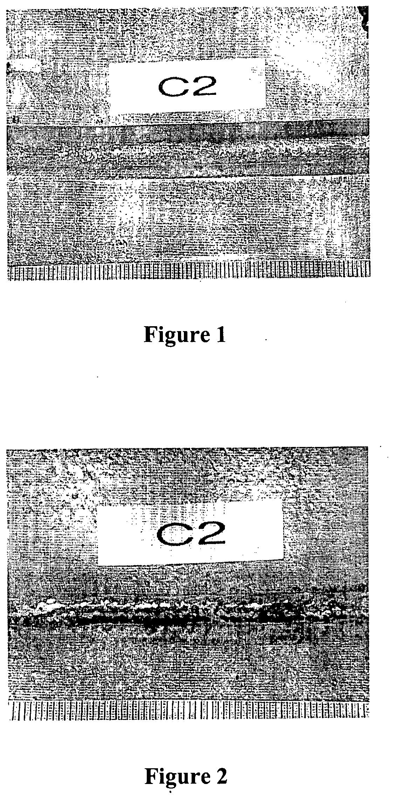

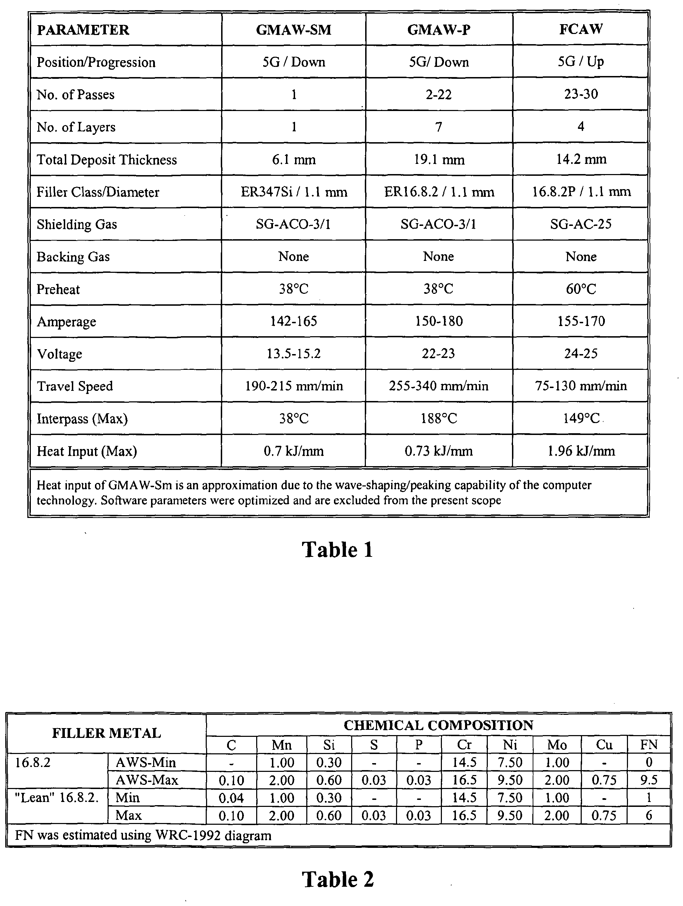

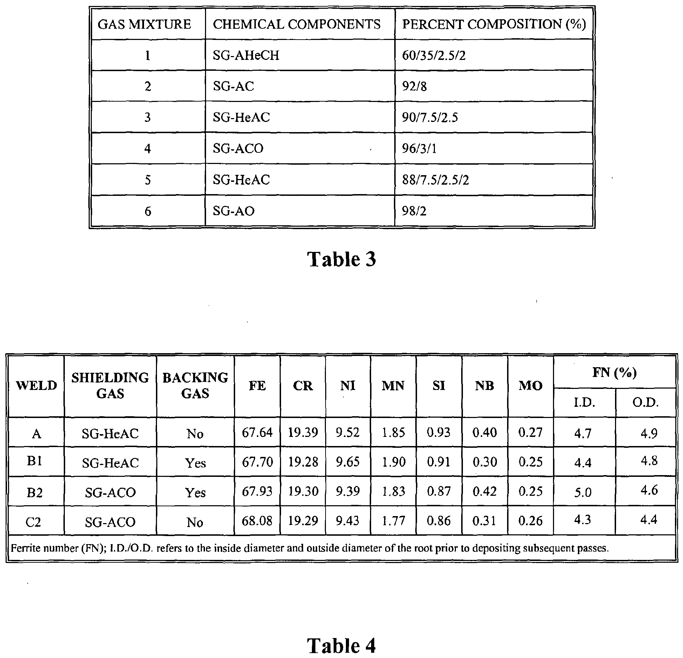

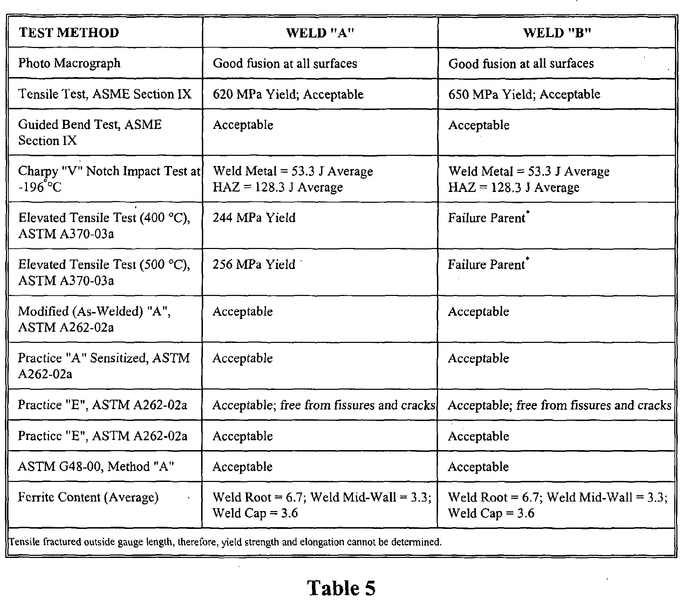

To assess the extent of oxidation on the process side of the root pass, six gas mixtures, listed in Table 3 below, were utilized with and without backing gas, on 8" NPS, schedule 40 (8.2 mm) 321 pipe in the 5G position and downhill progression. Shielding gas 1 and 2 of Table 3 were eliminated due to visual appearance. A typical example of a NBG root weld with gas number 4 is shown in **Figures 1 and 2**. To determine elemental composition throughout the weld, electron dispersive X-ray (EDX) spectrometer analysis and ferrite tests were performed on weld sections that were prepared with and without backing gas using the shielding gases 3 through 6. EDX analyses were performed on three distinct metallographic sections: Fusion line, base metal, and weld metal. The results from EDX analyses indicated no significant depletion of alloying elements, and the average relative weight percents of iron, chromium, nickel, manganese, silicon, niobium, and molybdenum are detailed in **Table 4** below.

Various attempts were made to perform an elemental map of the fusion line regions for welds A and C2 (see Table 4). However, these attempts proved unsuccessful,. Therefore, mapping could not be used to detect titanium depletion. Individual EDX spectra were obtained from spots located on/close to the fusion line and in the adjacent base metal and weld metal. All positions contained sufficient titanium or niobium for control of sensitization. Figure 1 depicts root bead weld C2 (see Table 4) outside surface, and Figure 2 depicts root bead weld C2 (see Table 4) inside surface.

### Hot Pass And Fill/Cap

It is generally preferred to use one gas for all processes, and SG-ACO-3/1 was shown to achieve the desired results for the GMAW-Sm root and GMAW-P passes. Furthermore, it was contemplated that the SG-ACO-3/1 shielding gas could also be used with the ER16.8.2 FCAW consumable. However, SG-ACO-3/1 shielding gas in combination with the ER16.8.2 wire created unacceptably "dirty" welds. In yet a further an alternative attempt, SG-AC-25 shielding gas was employed, which performed well under most circumstances.

### Metallurgical Evaluation And Results

The complete joint had the open root deposited with an ER347Si consumable using the GMAW-Sm process, in the vertical down progression. Weld "A" had the hot, fill and cap passes deposited with an ER16.8.2 consumable using the GMAW-P process in the vertical down progression. Weld "B" was completely welded out with ER16.8.2 FCAW, after the root pass. **Table 5** summarizes the test results for these welds.

### Production

In production, the GMAW-Sm root and GMAW-P hot pass and both GMAW-P and FCAW fill/cap were implemented. Typically, up to NPS 18 the initial production involved approximately 100 welds in sizes with a maximum 39.7 mm wall thickness. Other suitable wall thicknesses include those between 5 mm and 10 mm, between 10 mm and 20 mm, between 10 mm and 30 mm, and between 20 mm and 40 mm. All welds were initially 100% radiographed per ASME B31.3 with no rejectable indications. Remarkably, continued production produced the same excellent results. Furthermore, a relatively high level of acceptance of contemplated processes was observed with welders, which also expressed a strong preference of the processes as presented herein over the traditional GTAW/SMAW process currently utilized in welding of stainless steel. Thus, it should be recognized that for open root chemically stabilized welds contemplated GMAW-Sm processes without backing gas have been proven in laboratory, field, and shop environments to provide welds with excellent corrosion resistance and mechanical properties. The three combined processes (GMAW-Sm, GMAW-P, and FCAW) are very welder friendly, providing deposition rates several times (here: three times) higher than the conventional GTAW/SMAW welding processes. Furthermore, with adequate training a moderately skilled welder can consistently achieve repair rates, in both shop and field environments, of less than 1%.

Thus, specific embodiments and applications of improved welding processes have been disclosed. It should be apparent, however, to those skilled in the art that many more modifications besides those already described are possible without departing from the inventive concepts herein. The inventive subject matter, therefore, is not to be restricted except in the spirit of the present disclosure. Moreover, in interpreting the specification and contemplated claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Also, the term "at least one of" element A and B as used herein refers to the presence or use of elements A and/or B. Furthermore, where a definition or use of a term in a reference, which is incorporated by reference herein is inconsistent or contrary to the definition of that term provided herein, the definition of that term provided herein applies and the definition of that term in the reference does not apply.

## Claims

1. A method of welding austenitic steel pipes, comprising:
welding a root pass using GMAW-Sm to thereby deposit a root;
welding a hot pass using GMAW-P to thereby deposit additional weld metal onto the root whereby one or more hot passes are carried out using GMAW-P with a downhill progression to form a second layer of deposited weld metal, whereby this second layer is subsequently covered with two or more additional passes of GMAW-P, thereby completing a third layer; and
welding at least one of a fill pass and a cap pass using at least one of GMAW-P and FCAW wherein backing gas is omitted in the step of welding the root pass.

2. The method of claim 1 wherein the root pass is welded in 5G position downhill.

3. The method of claim 2 wherein the root pass material is selected to provide a chemically stabilized weld.

4. The method of claim 1 wherein at least one of the hot pass material and the fill pass material is formulated for stainless steel welding, has a molybdenum content of between 1.0% to 1.3%, and a ferrite number of between 1 and 6.

5. The method of one of the preceding claims, wherein the hot pass is welded in 5G position downhill.

6. The method of one of the preceding claims, wherein the hot pass is welded at a heat input of less than 0.85 kJ/mm.

7. The method of one of the preceding claims, wherein the step of welding the hot pass is performed by at least temporarily concentrating arc energy at a toe of the previously deposited root.

8. The method of one of the preceding claims, wherein the additional weld metal is formulated for welding stainless steel components for at least one of high pressure and high temperature service.

9. The method of one of the preceding claims, wherein the at least one of the fill pass and the cap pass are welded using FCAW.

10. The method of one of the preceding claims, wherein the stainless steel pipes are fabricated from the group consisting of 304 stainless steel, 316 stainless steel, 317 stainless steel, 321 stainless steel, and 347 stainless steel.

11. The method of one of the preceding claims, wherein the stainless steel pipes have a wall thickness of between 20 mm and 40 mm.

12. The method according to one of the preceding claims, comprising: depositing a root without backing gas to provide a chemically stabilized weld using a high-frequency current-controlled power supply in short circuiting welding mode; depositing a filler metal onto the root using a heat input of less than 0.85 kJ/mm; and depositing additional metal onto the filler metal using at least one of GMAW-P and FCAW.

13. The method of claim 12 wherein at least one of the steps of depositing the root, depositing the filler metal, and depositing the additional metal is semi-automated.

14. The method of claim 12 wherein at least two of the steps of depositing the root, depositing the filler metal, and depositing the additional metal are semi-automated.

15. The method of one of claims 12 to 14 wherein the austenitic steel is selected from the group consisting of 304 stainless steel, 316 stainless steel, 317 stainless steel, 321 stainless steel, and 347 stainless steel.

16. The method of one of claims 12 to 15 wherein the austenitic steel has a thickness of between 20 mm and 40 mm.

## Patentansprüche

1. Verfahren zum Schweißen von austenitischen Stahlrohren, umfassend:
Schweißen einer Wurzellage unter Verwendung von GMAW-Sm zum so Abscheiden einer Wurzel;
Schweißen eines Heißstichs unter Verwendung von GMAW-P zum so Abscheiden von zusätzlichem Schweißmetall auf die Wurzel, wodurch einer oder mehrere Heißstiche unter Verwendung von GMAW-P mit Abwärtsprogession zum Bilden einer zweiten Schicht aus abgeschiedenem Schweißmetall ausgeführt werden, wodurch diese zweite Schicht danach mit zwei oder mehreren zusätzlichen Stichen von GMAW-P bedeckt werden, wodurch eine dritte Schicht fertiggestellt wird; und
Schweißen mindestens eines Füllstichs und eines Kappenstichs unter Verwendung von mindestens einem von GMAW-P und FCAW, wobei das Trägergas im Schritt des Schweißens der Wurzellage ausgelassen wird.

2. Verfahren nach Anspruch 1, wobei die Wurzellage in der 5G-Position abwärts geschweißt wird.

3. Verfahren nach Anspruch 2, wobei das Wurzellagematerial ausgewählt wird, um eine chemisch stabilisierte Schweißnaht bereitzustellen.

4. Verfahren nach Anspruch 1, wobei mindestens eines von Heißstichmaterial und Füllstichmaterial für das Edelstahlschweißen formuliert ist und einen Molybdängehalt zwischen 1,0% bis 1,3% und eine Ferritzahl zwischen 1 und 6 aufweist.

5. Verfahren nach einem der vorhergehenden Ansprüche, wobei der Heißstich in der 5G-Position abwärts geschweißt wird.

6. Verfahren nach einem der vorhergehenden Ansprüche, wobei der Heißstich bei einem Wärmeeingang von weniger als 0,85 kJ/mm geschweißt wird.

7. Verfahren nach einem der vorhergehenden Ansprüche, wobei der Schritt des Schweißens des Heißstichs mindestens vorübergehend durch Konzentrieren der Bogenenergie an einer Zehe der zuvor abgeschiedenen Wurzel durchgeführt wird.

8. Verfahren nach einem der vorhergehenden Ansprüche, wobei das zusätzliche Schweißmetall zum Schweißen von Edelstahlkomponenten für mindestens eines von Hochdruck- oder Hochtemperaturwartung formuliert wird.

9. Verfahren nach einem der vorhergehenden Ansprüche, wobei mindestens entweder der Füllstich oder der Kappenstich unter Verwendung von FCAW geschweißt werden.

10. Verfahren nach einem der vorhergehenden Ansprüche, wobei die Edelstahlrohre aus der Gruppe hergestellt sind, die aus 304 Edelstahl, 316 Edelstahl, 317 Edelstahl, 321 Edelstahl und 347 Edelstahl besteht.

11. Verfahren nach einem der vorhergehenden Ansprüche, wobei die Edelstahlrohre eine Wandstärke zwischen 20 mm und 40 mm aufweisen.

12. Verfahren nach einem der vorhergehenden Ansprüche, umfassend: Abscheiden einer Wurzel ohne Trägergas zum Bereitstellen einer chemisch stabilisierten Schweißnaht unter Verwendung einer stromgesteuerten Hochfrequenzstromversorgung im Kurzschlussschweißmodus; Abscheiden eines Füllmetalls auf die Wurzel unter Verwendung eines Wärmeeingangs von weniger als 0,85 kJ/mm; und Abscheiden eines zusätzlichen Metalls auf das Füllmetall unter Verwendung von mindestens entweder GMAW-P oder FCAW.

13. Verfahren nach Anspruch 12, wobei mindestens einer der Schritte von Abscheiden der Wurzel, Abscheiden des Füllmetalls oder Abscheiden des zusätzlichen Metalls halbautomatisch ist.

14. Verfahren nach Anspruch 12, wobei mindestens zwei der Schritte von Abscheiden der Wurzel, Abscheiden des Füllmetalls und Abscheiden des zusätzlichen Metalls halbautomatisch sind.

15. Verfahren nach einem der Ansprüche 12 bis 14, wobei der austenitische Stahl ausgewählt ist aus der Gruppe, bestehend aus 304 Edelstahl, 316 Edelstahl, 317 Edelstahl, 321 Edelstahl und 347 Edelstahl.

16. Verfahren nach einem der Ansprüche 12 bis 15, wobei der austenitische Stahl eine Dicke zwischen 20 mm und 40 mm aufweist.

## Revendications

1. Procédé de soudage de tuyaux en acier austénitique, comprenant :
le soudage d'une passe de fond à l'aide de GMAW-Sm pour de cette manière déposer une racine ;
le soudage d'une passe chaude à l'aide de GMAW-P pour de cette manière déposer du métal de soudure supplémentaire sur la racine, une ou plusieurs passes chaudes étant ainsi effectuées à l'aide de GMAW-P avec une progression descendante pour former une deuxième couche de métal de soudure déposé, cette deuxième couche étant ainsi par la suite recouverte de deux ou plus de deux passes supplémentaires de GMAW-P, ce qui complète de cette manière une troisième couche ; et
le soudage d'au moins l'une d'une passe de remplissage et d'une passe de finition à l'aide d'au moins l'un du GMAW-P et du FCAW
dans lequel le gaz de protection envers est omis dans l'étape de soudage de la passe de fond.

2. Procédé selon la revendication 1 dans lequel la passe de fond est soudée en position 5G descendante.

3. Procédé selon la revendication 2 dans lequel le matériau de la passe de fond est choisi pour fournir une soudure chimiquement stabilisée.

4. Procédé selon la revendication 1 dans lequel au moins l'un du matériau de la passe chaude et du matériau de la passe de remplissage est formulé pour le soudage d'acier inoxydable, a une teneur en molybdène comprise entre 1,0 % et 1,3 % et a un indice de ferrite compris entre 1 et 6.

5. Procédé selon l'une des revendications précédentes, dans lequel la passe chaude est soudée en position 5G descendante.

6. Procédé selon l'une des revendications précédentes, dans lequel la passe chaude est soudée à un apport de chaleur inférieur à 0,85 kJ/mm.

7. Procédé selon l'une des revendications précédentes, dans lequel l'étape de soudage de la passe chaude est effectuée par concentration au moins temporaire d'énergie d'arc au niveau d'un bord de la racine précédemment déposée.

8. Procédé selon l'une des revendications précédentes, dans lequel le métal de soudure supplémentaire est formulé pour le soudage d'éléments en acier inoxydable pour une utilisation à au moins l'une d'une pression élevée et d'une température élevée.

9. Procédé selon l'une des revendications précédentes, dans lequel l'au moins une de la passe de remplissage et de la passe de finition est soudée à l'aide de FCAW.

10. Procédé selon l'une des revendications précédentes, dans lequel les tuyaux en acier inoxydable sont fabriqués à partir du groupe constitué par l'acier inoxydable 304, l'acier inoxydable 316, l'acier inoxydable 317, l'acier inoxydable 321 et l'acier inoxydable 347.

11. Procédé selon l'une des revendications précédentes, dans lequel les tuyaux en acier inoxydable ont une épaisseur de paroi comprise entre 20 mm et 40 mm.

12. Procédé selon l'une des revendications précédentes, comprenant : le dépôt d'une racine sans gaz de protection envers pour fournir une soudure chimiquement stabilisée à l'aide d'une alimentation électrique contrôlée en courant à haute fréquence en mode soudage par courts-circuits ; le dépôt d'un métal d'apport sur la racine à l'aide d'un apport de chaleur inférieur à 0,85 kJ/mm ; et le dépôt de métal supplémentaire sur le métal d'apport à l'aide d'au moins l'un du GMAW-P et du FCAW.

13. Procédé selon la revendication 12 dans lequel au moins l'une des étapes de dépôt de la racine, de dépôt du métal d'apport et de dépôt du métal supplémentaire est semi-automatisée.

14. Procédé selon la revendication 12 dans lequel au moins deux des étapes de dépôt de la racine, de dépôt du métal d'apport et de dépôt du métal supplémentaire sont semi-automatisées.

15. Procédé selon l'une des revendications 12 à 14 dans lequel l'acier austénitique est choisi dans le groupe constitué par l'acier inoxydable 304, l'acier inoxydable 316, l'acier inoxydable 317, l'acier inoxydable 321 et l'acier inoxydable 347.

16. Procédé selon l'une des revendications 12 à 15 dans lequel l'acier austénitique a une épaisseur comprise entre 20 mm et 40 mm.
